# EUROPÄISCHE PATENTANMELDUNG

(11) **EP 1 832 472 A1**
(43) Veröffentlichungstag der Anmeldung: **12.09.2007**
(21) Anmeldenummer: 07003753.6
(22) Anmeldetag: 23.02.2007
(51) Int. Cl.: B60Q 1/26, B60R 25/10

(54) **Kraftfahrzeug mit einer Scheibe und einem optischen Anzeigemittel**

(30) Priorität: 08.03.2006 DE 102006010624
(71) Anmelder: GM Global Technology Operations, Inc., Detroit, MI 48265-3000 (US)
(72) Erfinder: Evenson, Lars, 46142 Trollhättan (SE)
(74) Vertreter: Daniel, Ulrich W.P.

(57) **Zusammenfassung**

Ein Kraftfahrzeug (1) mit einer Scheibe (4) und einem von außen sichtbaren optischen Anzeigemittel (7) in einem Innenraum (5) ist zur Erhöhung der Sichtbarkeit des optischen Anzeigemittels (7) derart ausgebildet, dass die Scheibe (4) in einem Abschnitt (9) zum Zerstreuen des vom optischen Anzeigemittel (7) ausgehenden Lichts ausgelegt ist.

## Beschreibung

Die Erfindung bezieht sich auf ein Kraftfahrzeug mit einer Scheibe und einem von außen sichtbaren optischen Anzeigemittel in einem Innenraum.

Optische Anzeigemittel, wie Glühbirnen oder LEDs, finden besonders in modernen Kraftfahrzeugen zur Anzeige eines bestimmten Zustands des Kraftfahrzeugs eine zunehmende Verbreitung. Beispielsweise sind Diebstahlsicherungseinrichtungen bekannt, die über ein blinkendes optisches Anzeigemittel verfügen, um die Aktivierung der Diebstahlsicherungseinrichtung anzuzeigen. Dabei ist das optische Anzeigemittel in der Regel an einem Armaturenbrett oder einer Mittelkonsole im Innenraum des Kraftfahrzeugs derart angeordnet, dass es im Wesentlichen durch alle Scheiben, wie Front-, Heck- und Seitenscheiben, des Kraftfahrzeugs wahrgenommen werden kann, um potentielle Straftäter abzuschrecken. Wird die Diebstahlsicherungseinrichtung vom Nutzer des Kraftfahrzeugs deaktiviert, so erlischt auch das optische Anzeigemittel.

Die DE 299 14 909 U1 beschreibt eine Warnanzeigevorrichtung für Kraftfahrzeuge, wobei ein optischer Signalgeber hinter der Windschutzscheibe angeordnet ist und verschiedene Hinweise angezeigt werden können. Eine besondere Erhöhung der Sichtbarkeit der Informationen ist nicht angegeben.

Aus der EP 1 129 913 A2 ist ein Kraftfahrzeug mit einer Diebstahlwarnanlage bekannt, bei der zur Kenntlichmachung des aktivierten Zustands der Diebstahlwarnanlage eine bereits im Fahrzeuginnenraum vorhandene Innenraumleuchte eingesetzt wird.

Im Weiteren sind der DE 23 42 825 A1 zusätzliche Warnlampen an einem Kraftfahrzeug zu entnehmen, die eine Beschleunigung oder ein Bremsen anderen Verkehrsteilnehmern verdeutlichen sollen. Aufgrund der Ansteuerung der Warnlampen über ein bewegliches Pendel ist das Einschalten der zusätzlichen Warnlampen im abgestellten Zustand nicht möglich.

Die DE 30 27 519 A1 zeigt eine Leuchtvorrichtung für Kraftfahrzeuge mit einem Halter, der zwischen einem Dichtungsgummi und der Scheibe selbst eingeschoben werden kann. Mit einem solchen Halter können unter anderem zusätzliche Bremslichter an einer Heckscheibe des Kraftfahrzeugs montiert werden.

Ferner beschreibt die DE 298 02 734 U1 eine Anzeigevorrichtung in Fahrzeugen, bei der von einem Flüssigkristallbildschirm erzeugten Lichtsignale an einer Windschutzscheibe reflektiert und somit einem Nutzer sichtbar gemacht werden. Eine Übermittlung der Lichtsignale nach außen ist nicht erwähnt.

Die bekannten optischen Anzeigemittel sind insofern nachteilig, als eine geringfügige Verschmutzung der Scheiben oder aufgrund starken Regenfalls das häufig nur schwache Licht des optischen Anzeigemittels von außen nicht mehr deutlich wahrnehmbar ist, wodurch beispielsweise die Diebstahlsgefahr erhöht wird.

Es ist Aufgabe der Erfindung, ein Kraftfahrzeug der eingangs genannten Art zu schaffen, bei dem die Sichtbarkeit eines optischen Anzeigemittels im Innenraum stets gewährleistet ist.

Erfindungsgemäß wird die Aufgabe dadurch gelöst, dass die Scheibe in einem Abschnitt zum Zerstreuen des vom optischen Anzeigemittel ausgehenden Lichts ausgelegt ist.

Der Kerngedanke der Erfindung besteht darin, dass eine Scheibe eines Kraftfahrzeugs, insbesondere eine Frontscheibe, nicht durchgehend klar und durchsichtig bzw. hochtransparent ist und daher zumindest in einem Abschnitt derart ausgelegt ist, dass das von dem optischen Anzeigemittel im Innenraum des Kraftfahrzeugs ausgehende und in Richtung dieses Abschnitts strahlende Licht dort zerstreut wird. Somit entsteht der subjektive Eindruck, dass die Scheibe selbst leuchten würde bzw. beleuchtet ist. Dabei kann die zerstreuende Eigenschaft vom Fachmann in an sich beliebiger Weise hervorgerufen werden, beispielsweise auch durch das zusätzliche Aufbringen einer Kunststofffolie, die als Streulinse wirkt. Bevorzugt ist die Scheibe jedoch wie im Folgenden beschrieben ausgebildet. Durch das Zerstreuen wird das Licht in alle Raumwinkel abgelenkt, wobei es für den Fachmann ersichtlich ist, dass das optische Anzeigemittel über eine ausreichende Intensität verfügen muss, um das weit aufgefächerte Licht aus beliebigen Raumrichtungen tatsächlich wahrnehmen zu können.

Der Vorteil der Erfindung liegt darin, dass durch das bloße zerstreuende Ausbilden eines Abschnitts der Scheibe des Kraftfahrzeugs eventuell zusammen mit einer erhöhten Intensität des optischen Anzeigemittels die darzustellende Information auch bei verschmutzter, von Regentropfen bedeckter oder leicht zugeschneiter Scheibe zuverlässig wahrgenommen werden kann, da bei einer hinreichenden Größe des Abschnitts der Scheibe zum Zerstreuen des Lichts zumindest ein Teil des gestreuten Lichts wahrnehmbar ist.

Bevorzugt ist das optische Anzeigemittel einer Diebstahlsicherungseinrichtung zugeordnet und zeigt ihren aktivierten Zustand an. Hierbei kann die Diebstahlsicherungseinrichtung in an sich beliebiger Weise ausgestaltet sein.

Um das zuverlässige Anzeigen auch bei längeren Standzeiten zu gewährleisten, ist das optische Anzeigemittel in Form einer stromsparenden LED ausgebildet, beispielsweise eine rote LED an einem Armaturenbrett, um die aktivierte Diebstahlsicherungseinrichtung zu kennzeichnen.

Zur Ausgestaltung des lichtzerstreuenden Abschnitts der Scheibe ist zweckmäßigerweise die Scheibe in dem Abschnitt geätzt und/oder eingeschliffen und/oder mattiert und/oder geriffelt und/oder mit einem Eisblumeneffekt versehen. Dabei ist es dem Fachmann möglich, beispielsweise durch das Einschleifen von Unebenheiten oder Kanten, Streuzentren für das Licht zu erzeugen oder durch einen Ätzvorgang die Scheibe einzutrüben, wodurch das Licht an den Eintrübungen gestreut wird. Die gleichen Effekte können mit Mattierungen, die beispielsweise durch Aufrauungen der Glasoberfläche erreicht werden, oder Riffelungen nach Art eines Badezimmerfensters erreicht werden. Ebenso kann die Oberfläche der Scheibe in der Form von Eisblumen eingeschliffen werden.

Um die Lichtausbeute des optischen Anzeigemittels zu erhöhen, ist nach einer Weiterbildung dem Anzeigemittel, beispielsweise einer roten LED, ein geeigneter Lichtleiter, vorzugsweise aus einem transparenten Kunststoffmaterial, zugeordnet, damit das von dem Anzeigemittel ausgehende Licht unmittelbar an eine Innenseite der Scheibe im Bereich des Abschnitts geleitet wird. Demnach wird praktisch sämtliches Licht des Anzeigemittels an dem Abschnitt gestreut und die Intensität dieses Streulichts ist wesentlich erhöht. Der Lichtleiter kann auch dazu verwendet werden, das Licht gleichzeitig zu mehreren Scheiben mit jeweils einem entsprechenden Abschnitt zu leiten. Im Weiteren ist es möglich, das Anzeigemittel beispielsweise unterhalb der Armaturentafel zu installieren und lediglich das ausgestrahlte Licht zu der Scheibe zu transportieren, um es nach Außen sichtbar zu machen.

Insbesondere kann der lichtstreuende Abschnitt an einer Innenseite der Scheibe, die dem Innenraum des Kraftfahrzeugs zugewandt ist, ausgebildet sein. Dies bietet sich besonders bei laminierten mehrschichtigen Verbundsglasscheiben, wie sie insbesondere für Frontscheiben eingesetzt werden, an. Somit ist ein zuverlässiges Zerstreuen des Lichts gewährleistet.

Zur Formgebung des Abschnitts ist in Ausgestaltung dieser dreieckig ausgebildet, um bei Verwendung einer roten Lichtquelle für einen Betrachter die Erinnerung an ein Warnsignal hervorzurufen. Gegebenenfalls kann auch nur ein Dreieckumriss lichtzerstreuend ausgebildet sein. Selbstverständlich ist eine beliebige Formgebung des Bereichs möglich.

Selbstverständlich kann eine derartige Scheibe mit einem lichtzerstreuenden Abschnitt auch nachträglich in ein Kraftfahrzeug eingebaut werden, um die Sichtbarkeit des optischen Anzeigemittels von außen zu erhöhen. Ebenso ist es möglich, beispielsweise durch einen Ätzvorgang, den lichtzerstreuenden Effekt an einem Abschnitt einer ansonsten klaren und transparenten Scheibe eines Kraftfahrzeugs hervorzurufen.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der Erfindung ist nur durch die Ansprüche definiert.

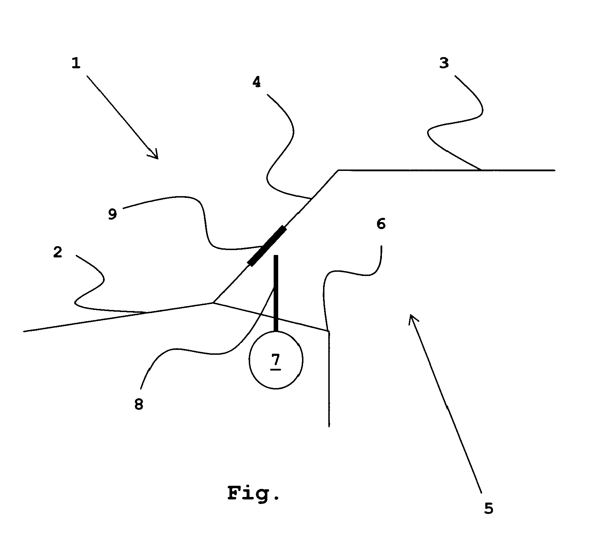

Die Erfindung wird im Folgenden anhand eines Ausführungsbeispiels unter Bezugnahme auf die zugehörige Zeichnung näher erläutert. Die einzige Fig. der Zeichnung zeigt eine Teilansicht eines erfindungsgemäßen Kraftfahrzeugs in schematischer Seitenansicht.

Das Kraftfahrzeug 1 umfasst eine Motorhaube 2, ein Dach 3 und eine Scheibe 4 in Form einer Windschutzscheibe. In einem Innenraum 5 des Kraftfahrzeug 1, beispielsweise an einem Armaturenbrett 6 oder einer Mittelkonsole, ist ein optisches Anzeigemittel 7, insbesondere eine rote LED einer Diebstahlsicherungseinrichtung, angeordnet. Das optische Anzeigemittel 7 ist durch die Scheibe 4 hindurch von außen einsehbar, um einen potentiellen Straftäter abzuschrecken.

Zur Erhöhung der Lichtausbeute ist dem optischen Anzeigemittel 7 ein Lichtleiter 8, insbesondere aus einem hierfür geeigneten Kunststoffmaterial, zugeordnet, mit dem das von dem optischen Anzeigemittel 7 ausgehende Licht auf einen Abschnitt 9 der Scheibe 4 gerichtet wird. Dieser Abschnitt 9 ist für das Licht zerstreuend ausgebildet. Hierzu kann der Abschnitt 9 beispielsweise an einer Innenseite der Scheibe 4 geätzt, eingeschliffen, mattiert, geriffelt oder mit einem Eisblumeneffekt oder in einer sonstigen vom Fachmann wählbaren Weise bearbeitet sein, um zu erreichen, dass das von dem Lichtleiter 8 austretende Licht in praktisch alle Raumwinkel zerstreut wird. Somit wird subjektiv der Effekt erzielt, als würde die Scheibe 4 bzw. deren Abschnitt 9 selbst als Leuchtmittel wirken. Hierdurch ist insbesondere bei einer Verschmutzung der Scheibe 4 gewährleistet, dass das optische Anzeigemittel 7 noch wahrgenommen werden kann. Es versteht sich, dass die Intensität des optischen Anzeigemittels 7 dementsprechend erhöht sein kann, um das Licht aus allen Raumwinkeln wahrnehmen zu können.

Selbstverständlich kann eine vorhandene transparente Scheibe 4 an einem Kraftfahrzeug durch eine solche mit einem lichtzerstreuenden Abschnitt 9 ersetzt werden. Ebenso kann ein solcher Abschnitt 9 nachträglich an einer transparenten Scheibe 4 ausgebildet werden.

### Bezugszeichenliste

- 1.: Kraftfahrzeug
- 2.: Motorhaube
- 3.: Dach
- 4.: Scheibe
- 5.: Innenraum
- 6.: Armaturenbrett
- 7.: optisches Anzeigemittel
- 8.: Lichtleiter
- 9.: Abschnitt

## Patentansprüche

1. Kraftfahrzeug mit einer Scheibe (4) und einem von außen sichtbaren optischen Anzeigemittel (7) in einem Innenraum (5), **dadurch gekennzeichnet, dass** die Scheibe (4) in einem Abschnitt (9) zum Zerstreuen des von dem optischen Anzeigemittel (7) ausgehenden Lichts ausgelegt ist.

2. Kraftfahrzeug nach Anspruch 1, **dadurch gekennzeichnet, dass** das optische Anzeigemittel (7) einer Diebstahlsicherungseinrichtung zugeordnet ist.

3. Kraftfahrzeug nach Anspruch 1 oder 2, **dadurch gekennzeichnet, dass** das optische Anzeigemittel (7) eine LED, insbesondere eine rotes Licht abgebende LED ist.

4. Kraftfahrzeug nach einem der Ansprüche 1 bis 3, **dadurch gekennzeichnet, dass** die Scheibe (4) in dem Abschnitt (9) geätzt und/oder eingeschliffen und/oder mattiert und/oder geriffelt und/oder mit einem Eisblumeneffekt versehen ist.

5. Kraftfahrzeug nach einem der Ansprüche 1 bis 4, **dadurch gekennzeichnet, dass** dem optischen Anzeigemittel (7) ein Lichtleiter (8) zur Leitung des Lichts von dem optischen Anzeigemittel (7) zu einer Innenseite der Scheibe (4) im Bereich des Abschnitts (9) zugeordnet ist.

6. Kraftfahrzeug nach einem der Ansprüche 1 bis 5, **dadurch gekennzeichnet, dass** der Abschnitt (9) an einer Innenseite der Scheibe (4) ausgebildet ist.

7. Kraftfahrzeug nach einem der Ansprüche 1 bis 6, **dadurch gekennzeichnet, dass** der Abschnitt (9) dreieckig ist.
